Europäisches Patentamt

(19) European Patent Office

Office européen des brevets

(11) EP 0 934 918 A1

(12) EUROPEAN PATENT APPLICATION
published in accordance with Art. 158(3) EPC

(43) Date of publication:
11.08.1999 Bulletin 1999/32

(21) Application number: 98933971.8

(22) Date of filing: 28.07.1998

(51) Int. Cl.$^6$: **C05G 3/00**, C08L 23/26,
C08L 67/04, C08K 5/098,
C08K 5/20, B65F 1/00,
B65D 30/02

(86) International application number:
PCT/JP98/03365

(87) International publication number:
WO 99/05078 (04.02.1999 Gazette 1999/05)

(84) Designated Contracting States:
BE DE IT

(30) Priority: 28.07.1997 JP 21707297
05.09.1997 JP 25621897
09.09.1997 JP 26090997

(71) Applicant:
DAICEL CHEMICAL INDUSTRIES, Ltd.
Sakai-shi, Osaka 590-0905 (JP)

(72) Inventors:
• DAITO, Terumasa
Osaka 592-8344 (JP)

• ISHIKAWA, Masahiro
Chiba 270-0035 (JP)
• FUJII, Kenji
Hyougo 671-1234 (JP)
• NAKATA, Koji
Hyougo 671-1234 (JP)

(74) Representative:
Portal, Gérard et al
Cabinet Beau de Loménie
158, rue de l'Université
75340 Paris Cédex 07 (FR)

(54) **DEGRADABLE COAT BEARING GRANULAR COMPOSITIONS FOR AGRICULTURAL AND HORTICULTURAL USE, BIODEGRADABLE RESIN COMPOSITION, MOLDINGS AND FILMS OF THE SAME, PROCESS FOR THE PRODUCTION OF FILMS, AND DEGRADABLE TRASH BAGS**

(57)     The first aspect of the present invention relates to a particle-state composition for agriculture and gardening characterized in that a coating material A or a mixture composed of the coating material A and a coating material B is coated on a particle-state fertilizer, and the coating material A is a biodegradable cellulose ester composition, and the coating material B is at least one selected from the group consisting of an olefin polymer, a copolymer containing an olefin, a polyvinylidene chloride, a copolymer containing vinylidene chloride, a diene-based polymer, waxes, a petroleum resin, a natural resin, a cellulose acetate resin, a polycaprolactone, and oils & fats and a modified product therefrom.

The second aspect of the present invention relates to a biodegradable resin composition which comprises the lactone resin, the synthetic aliphatic polyester resin, and the metallic salt or amide of a fatty acid, wherein the weight ratio of the lactone resin/the synthetic aliphatic polyester resin ranges in 5/95-70/30, and a proportion of the metallic salt of a fatty acid or an amide of a fatty acid is 0.2-5 parts by weight based on 100 parts by weight of the total amount of the lactone resin and the synthetic aliphatic polyester resin, and it relates to a film molded therefrom by an inflation method.

The third aspect of the present invention is a bag for garbages in which the above-mentioned bag for garbages is particularly processed as a bag for removing water having many small openings.

EP 0 934 918 A1

## Description

TECHNICAL FIELD

A first aspect of the present invention relates to a particle-state fertilizer which is covered by a degradable coating layer. In more detail, it relates to a particle-state fertilizer which is covered by a degradable coating layer comprising a biodegradable cellulose ester composition.

The coating layer for the particle-state fertilizer to be employed in the present invention can be decomposed by microorganisms in soil, and it is not finally remained in the soil. Further, the coating layer can include a variety of promoters or chemicals in order to control an elution of the particle-state fertilizer.

A second aspect of the present invention relates to a biodegradable resin composition comprising a lactone resin having a specified formulation, a synthetic aliphatic polyester resin, and a metallic salt of a fatty acid or an amide of a fatty acid, and further, a liquid-state lubricant, minutely-powdered silica and/or starch, and relates to a molded article from the resin composition, a film, particularly, an inflation film and a method for the preparation thereof.

A third aspect of the present invention relates to a degradable bag for garbages and a bag for garbages for removing water in which the bag for garbages has many openings.

BACKGROUND ART

A first aspect of the present invention will be illustrated.

Hitherto, there have been developed a variety of fertilizers which are a fertilizing effect-adjustable type fertilizer for the purpose of allowing to exhibit the fertilizing effect depending upon growth of harvests. Particularly, there have been developed and commercially sold a great many of particle-state fertilizers in which the surface is coated by coating materials. As described in JP-B-95000505 Official Gazette, there are proposed a variety of fertilizers in which a fertilizing effect can be adjusted, for example, in US Patent No. 3,295,950 Official Gazette, JP-B-65028927 Official Gazette, JP-B-69028457 Official Gazette, GB Patent No. 815829 Official Gazette, JP-B-62015832 Official Gazette, and JP-B-67013681 Official Gazette, etc. However, it is taught that it is difficult to adjust an elution rate of fertilizing components in the fertilizing effect-adjustable type fertilizers.

On the other hand, JP-B-85021952 and JP-B-85003040 Official Gazettes disclose a method in which there is employed a coating material containing a polyolefin as a main component, and in the case of coating the surface of the particle-state fertilizers, a solution of a coating material is sprayed on the particle-state fertilizer, and drying is simultaneously carried out by circulating heat air, whereby, a coating layer is formed. As a characteristic of the technology, it is taught that an elution rate of the fertilizing components can be controlled in the particle-state fertilizer, and there is practically employed the above-mentioned method for forming the coating layer on the surface of the particle-state fertilizer in a wide field.

Further, JP-B-85003040 and JP-A-55061672 Official Gazettes show that a function for controlling the elution rate is maintained by dispersing an inorganic powdered material such as talc and sulphur into a coating layer composed of a polyolefin-based resin, and, there are simultaneously accelerated degradation and decomposition of residual coating layers after elution.

In the particle-state fertilizers which have been hitherto proposed, the coating layer is not broken down and decomposed, and even in the case that it was broken down, it remains in the soil without decomposition, resulting in that there are caused insufficient growth of harvests and a danger as causing public pollution in a soil environment and water supplying and rivers near by fields. For the reason, there has been intensively desired a particle-state fertilizer in which a coating layer has degradability, and a durability of a fertilizing effect can be controlled. In such the degradable coating layer, "degradability" means degradation by light, oxygen, and microorganisms, etc., and particularly, in a conventional particle-state fertilizer having a coating layer, it is difficult to control the elution rate of fertilizing components, resulting in that there is a drawback that a fertilizing period is readily affected by weather and circumstance such as soil, etc. Also, it is indicated that the coating layers after elution of the fertilizing components remain in a soil for a long period of time without degradation.

Further, there have been tried a great deal of utilizations concerning biodegradable resins, for example, JP-A-07033576 Official Gazette states a combination of a polycaprolactone, a polylactic acid, and an aliphatic polyester compound with cellulose derivatives, polyethylenes having a low molecular weight, and paraffins, etc. However, in the case, since the polycaprolactone to be employed has a melting point of 60°C, there is occasionally caused a blocking in transportation and storing of products. Still further, since the polylactic acid and the aliphatic polyester have poor solubility to solvents, there is difficulty in practical uses, whereby, it is not sufficiently satisfied yet. Also, in the above-mentioned JP-B-95000505 Official Gazette, there is also likewise disclosed a particle-state fertilizer coated by the polycaprolactone.

Accordingly, the first aspect of the present invention aims at providing a particle-state composition for agriculture and gardening in which a durable time of a fertilizing effect can be controlled, and a coating layer is broken down and decomposed by microorganisms in soils after elution of fertilizing components, and it does not remain in the soils, whereby, residual components disappear by degradation and decomposition of the coating layer after a growth period of harvests, resulting in that there becomes easy a control for supplying a fertilizer.

There are described common matters in the second and third aspects of the present invention.

Biodegradable resins have nearly the same physical properties as general-purpose plastics in uses. However, after wasted, those are fast decomposed and returned to soils by natural conditions such as microorganisms which are bacteria and mildew, temperature, moisture, and light under natural circumstances such as active sludge, soils, water, and composts.

A part of those is finally changed to carbon dioxide and water.

Hitherto, as the biodegradable resins, there have been known a blend-based resin composition such as a starch-EVOH (a polyvinyl alcohol)-based resin, an EVOH-aliphatic polyester-based resin, an aliphatic polyester-based resin-polyolefin-based resin, and the composition of the resins is practically employed as molded articles having a variety of shapes.

As a polyester-based biodegradable resin, JP-A-08011206 Official Gazette states an idea concerning a downward-dice in order to prevent a draw-down during molding, and JP-A-08150658 Official Gazette states a method for preparation such as a specified temperature in molding and molding conditions in which there is employed a starch-EVOH-polycaprolactone based resin.

JP-A-08188706 Official Gazette discloses a bag for holding kitchen garbages comprising a biodegradable plastics characterized by molding a composition in which there are mixed 80-100% by weight of a polycaprolactone, 20-0% by weight of a biodegradable polyester-based resin having a linear chain and, further, 0.3-0.8 part by weight of a lubricant is mixed based on 100 parts by weight of the mixture.

The second aspect of the present invention will be further described.

The above-mentioned bag for garbages, which comprises a composition of the polycaprolactone with the biodegradable polyester-based resin having a linear chain, has a problem in a mechanical strength, resulting in that it is difficult to mass-produce a film, and decomposition rate is not sufficient in the bag for garbages obtained.

Further, in the case that the film is molded using the above-mentioned resin composition, particularly, in the case that a tubular film is prepared by a conventional inflation method for the preparation of the film, it is difficult to obtain a satisfied tubular film because the film occasionally causes a blocking during passing through rolls for nipping, and causes gelation, gumming, foaming, and longitudinal streaks, etc., and further, anithotropy is apt to be formed in a mechanical strength. There has been desired a method for the preparation of a tubular film having well-balanced excellent biodegradability and/or degradability, a moisture resistance, heat-sealing properties, and a mechanical strength, etc.

At a present situation, it is essentially required that a temperature is adjusted to not more than 30°C at immediately before entering into rolls for nipping, and it is required to pass through the rolls and, specifically, a tubular film stretched by blowing while heating has been cooled by airing with chilled air of 20°C at immediately after a die, and by equipping with a cooling apparatus at before the rolls for nipping. As specific examples of the cooling apparatus, there are enumerated a method in which a cooling roll capable of cooling by water streaming is equipped at before rolls for nipping so that those are in contact with a film, and a method of multi-stage airing by blowing chilled air against a film. When the above-mentioned film temperature exceeds 30°C, the film unpractically causes blocking.

Accordingly, the second aspect of the present invention aims at solving the above-mentioned problems, and providing a resin composition having excellent biodegradability and/or degradability, and a molded article thereof, and moreover, a tubular film having well-balanced water resistance, heat-sealing properties, and mechanical strength, and a method for the preparation thereof.

The third aspect of the present invention is further illustrated. A bag for holding kitchen garbages disclosed in the JP-A-08188706 Official Gazette has a problem in a mechanical strength, and it is difficult to mass-produce films. Further, even in the case that the bag for garbages obtained is thrown into an apparatus for preparing composts after filled with kitchen garbages in household, since decomposition requires 100 days in the bag for holding garbages, it is not looked upon that decomposition speed of the garbages is sufficiently quick.

Still further, JP-A-08157002 Official Gazette discloses a bag for removing water comprising a biodegradable film and/or biodegradable cloth, specifically, a bag for removing water in which a film composed of starch as a main material is laminated with a rayon non-woven cloth. However, it has an inherent problem that mechanical properties (strength and extension ratio) lower and mildew occurs by water-wetting because starch is a main material and, further, an inherent problem that it lacks clarity in the case that letters, etc. are printed.

Accordingly, the third aspect of the present invention aims at solving the above-mentioned problems, and providing a bag for garbages and a bag for garbages for removing water which have an excellent biodegradability and/or degradability.

DISCLOSURE OF THE INVENTION

The inventors of the present invention, as a result of an intensive investigation for solving the above-mentioned problems, have completed the present invention.

In the first aspect of the present invention, there are provided the following embodiments.

No. 1 of the first aspect is a particle-state composition for agriculture and gardening characterized in that a coating material A or a mixture of a coating material A with a coating material B is coated on a particle-state fertilizer, and the coating material A is a biodegradable cellulose ester composition, and the coating material B is at least one selected from the group consisting of an olefin polymer, a copolymer containing an olefin, a polyvinylidene chloride, a copolymer containing vinylidene chloride, a diene-based polymer, waxes, a petroleum resin, a natural resin, a cellulose acetate resin, a polycaprolactone, and oils & fats and a modified product therefrom.

No. 2 of the first aspect is a particle-state composition for agriculture and gardening described in No. 1 of the first aspect in the present invention, characterized in that the coating material A is a biodegradable cellulose ester composition containing a cellulose ester which has an average substitution degree of not more than 2.15 and, moreover, in which not less than 60% by weight is decomposed after 4 weeks based on the amount of carbon dioxide gas produced in an experimental method for biodegradability according to the ASTM 125209-91.

No. 3 of the first aspect is a particle-state composition for agriculture and gardening described in No. 1 of the first aspect in the present invention, characterized in that the coating material A is a biodegradable cellulose ester composition containing a cellulose acetate which has an average substitution degree of 1.0-2.15 and an average polymerization degree of 50-250, and an equivalent ratio of alkaline metals or alkaline earth metals with respect to the amount of sulfuric acid remained of 0.1-1.1.

No. 4 of the first aspect is a particle-state composition for agriculture and gardening described in any one of Nos. 1-3 of the first aspect in the present invention, characterized in that the biodegradable cellulose ester composition is a composition containing 0-100 parts by weight of a plasticizer and/or an aliphatic polyester and 0-5 parts by weight of a photo-decomposing accelerator and/or a biodegradation accelerator based on 100 parts by weight of the cellulose ester.

No. 5 of the first aspect is a particle-state composition for agriculture and gardening described in the No. 2 or 3 of the first aspect in the present invention, characterized in that the biodegradable cellulose ester is a cellulose acetate.

No. 6 of the first aspect is a particle-state composition for agriculture and gardening described in the No. 4 of the first aspect in the present invention, characterized in that the plasticizer is at least one or more compounds selected from the group consisting of an aromatic polyvalent carboxylate containing a phthalate, an aliphatic polyvalent carboxylate, a lower fatty acid ester or phosphate of a polyvalent alcohol, and polyols in which ε-caprolactone is added to a polyvalent alcohol.

No. 7 of the first aspect is a particle-state composition for agriculture and gardening described in the Nos. 1-3 of the first aspect in the present invention, characterized in that the biodegradable cellulose ester is a biodegradable cellulose ester which is a composition containing a plurality of cellulose esters having different degree of substitution, which contains not less than 10% by weight of a cellulose ester having an average substitution degree of not more than 2.15 based on the total amount of the cellulose ester, and in which not less than 20% by weight is decomposed after 4 weeks based on the amount of carbon dioxide gas generated in an experimental method according to the ASTM 125209-91.

No. 8 of the first aspect is a particle-state composition for agriculture and gardening described in the No. 1 of the first aspect in the present invention, characterized in that the coating material B is a polycaprolactone which belongs to polyesters synthesized by a ring-opening addition polymerization of ε-caprolactone.

In the second aspect of the present invention, as a result of an intensive investigation in order to attain the aim, the present inventors have found out that there can be obtained a tubular film which is well-balanced among biodegradability and/or degradability, a moisture resistance, heat-sealing properties, and a mechanical strength without causing blocking by carrying out a method for the preparation of a film even though not employing the above-mentioned cooling operations and cooling apparatus.

The method is an inflation method for the preparation of a film in which a resin composition is extruded from a circular die in a tubular-state, and expanded by a pressure of a gas blown into tube and, further, folded by rolls for nipping. The resin composition comprises a polycaprolactone, a synthetic aliphatic polyester resin and a metallic salt or amide of a fatty acid, a liquid-state lubricant, finely-powdered silica and/or starch, which has an excellent biodegradability and/or degradability. As a result of findings, the present invention has been completed.

In the second aspect of the present invention, the following embodiments are provided.

No. 1 of the second aspect in the present invention is a biodegradable resin composition which comprises a polycaprolactone, a synthetic aliphatic polyester resin, and a metallic salt or amide of a fatty acid.

No. 2 of the second aspect in the present invention is a biodegradable resin composition described in the No.

1 of the second aspect in the present invention, wherein a proportion of the metallic salt or amide of a fatty acid is 0.2-5 parts by weight based on 100 parts by weight of the total amount of the polycaprolactone and the synthetic aliphatic polyester resin.

No. 3 of the second aspect in the present invention is a biodegradable resin composition described in any one of the No. 1 or 2 of the second aspect in the present invention, wherein the polycaprolactone and the synthetic aliphatic polyester resin range in the weight ratio of 5/95-70/30.

No. 4 of the second aspect in the present invention is a biodegradable resin composition described in any one of the Nos. 1-3 of the second aspect in the present invention, wherein there is further included a liquid lubricant in 0.1-3 parts by weight based on 100 parts by weight of the total amount of the polycaprolactone and the synthetic aliphatic polyester resin.

No. 5 of the second aspect in the present invention is a biodegradable resin composition described in any one of the Nos. 1-4 of the second aspect in the present invention, wherein there is further included a finely-powdered silica in 0.1-3 parts by weight based on 100 parts by weight of the total amount of the polycaprolactone and the synthetic aliphatic polyester resin.

No. 6 of the second aspect in the present invention is a biodegradable resin composition described in any one of the Nos. 1-5 of the second aspect in the present invention, wherein there is further included starch in 10-80 parts by weight based on 100 parts by weight of the total amount of the polycaprolactone and the synthetic aliphatic polyester resin.

No. 7 of the second aspect in the present invention is a biodegradable resin molded article which comprises a biodegradable resin composition described in any one of the Nos. 1-6 of the second aspect in the present invention.

No. 8 of the second aspect in the present invention is a biodegradable resin molded article described in the No. 7 of the second aspect in the present invention, wherein the molded article is a film.

No. 9 of the second aspect in the present invention is a method for the preparation of a film, wherein a resin composition described in any one of the Nos. 1-6 of the second aspect in the present invention is extruded from a circular die as a tubular-state film, a gas is blown into the tubular-state film and, the tubular-state film is expanded by a pressure of the gas blown and, further, folded by rolls for nipping.

No. 10 of the second aspect in the present invention is an inflation film obtained by a method described in the No. 9 of the second aspect in the present invention.

In the third aspect of the present invention, the following embodiments are provided.

No. 1 of the third aspect in the present invention is a degradable bag for garbages obtained by molding the biodegradable resin composition which comprises a lactone resin, a synthetic aliphatic polyester resin, and a metallic salt or amide of a fatty acid.

No. 2 of the third aspect in the present invention is a degradable bag for garbages described in the No. 1 of the third aspect in the present invention, wherein a proportion of the metallic salt or amide of a fatty acid is 0.2-5 parts by weight based on 100 parts by weight of the total amount of the lactone resin and the synthetic aliphatic polyester resin.

No. 3 of the third aspect in the present invention is a degradable bag for garbages described in any one of the Nos. 1-2 of the third aspect in the present invention, wherein the lactone resin and the synthetic aliphatic polyester resin range in the weight ratio of 5/95-70/30.

No. 4 of the third aspect in the present invention is a degradable bag for garbages described in any one of the Nos. 1-3 of the third aspect in the present invention, wherein there is further included a liquid-state lubricant in 0.1-3 parts by weight based on 100 parts by weight of the total amount of the lactone resin and the synthetic aliphatic polyester resin.

No. 5 of the third aspect in the present invention is a degradable bag for garbages described in any one of the Nos. 1-4 of the second aspect in the present invention, wherein there is further included a finely-powdered silica in 0.1-3 parts by weight based on 100 parts by weight of the total amount of the lactone resin and the synthetic aliphatic polyester resin.

No. 6 of the third aspect in the present invention is a degradable bag for garbages described in any one of the Nos. 1-5 of the third aspect in the present invention, wherein there is further included starch in 10-80 parts by weight based on 100 parts by weight of the total amount of the lactone resin and the synthetic aliphatic polyester resin.

No. 7 of the third aspect in the present invention is a degradable bag for garbages in any one of the Nos. 1-5 of the third aspect in the present invention, wherein the bag has a plurality of openings.

No. 8 of the third aspect in the present invention is a degradable bag for garbages in any one of the Nos. 1-7 of the third aspect in the present invention, wherein a tear strength at ordinary temperatures is not less than 450 kg/cm$^2$, a tear strength at 80°C is not more than 10 kg/cm$^2$.

No. 9 of the third aspect in the present invention is a bag for removing water which comprises a degradable bag for garbages in the No. 7 of the third aspect in the present invention.

BRIEF DESCRIPTION OF DRAWINGS

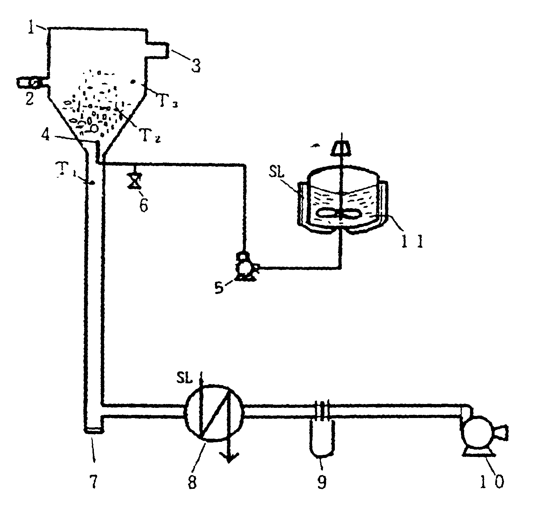

The figure I-1 is an outlined drawing showing an example of apparatuses which are appropriate for preparing the invented products.

BEST MODE FOR CARRYING OUT THE INVENTION

Hereinafter, there are illustrated embodiments for carrying out the first aspect of the present invention.

The particle-state composition for agriculture and gardening of the present invention is a particle-state fertilizer characterized in that it can be obtained by coating while spraying a solution of the above-mentioned coating material onto the particle-state fertilizer, and instantly drying by blowing a high speed and heat air stream at a sprayed position, and the coating material has a degradability and an adjustable fertilizing period.

The biodegradable cellulose ester composition, which is employed for the coating material A in the present invention, contains a biodegradable cellulose ester which has an average substitution degree of not more than 2.15 (provided that substantially not include 0) and, moreover, in which not less than 60% by weight is decomposed after 4 weeks based on the amount of carbon dioxide gas produced in an experimental method according to the ASTM (American Society for Testing Materials) 125209-91. Hereinafter, a cellulose ester having an average substitution degree of not more than 2.15 is abbreviated as a cellulose ester having a low substitution degree, so far as not particularly mentioned.

Further, the biodegradable cellulose ester composition employed in the present invention may be a composition containing a cellulose ester having an average substitution degree of not more than 2.15, an average polymerization degree of 50-250, and an equivalent ratio of alkaline metals or alkaline earth metals with respect to the amount of sulfuric acid remained of 0.1-1.1.

Still further, the biodegradable cellulose ester composition employed in the present invention may be also comprised the cellulose ester alone having a low substitution degree, and it may be composed a plurality of cellulose esters having a different substitution degree which contain not less than 10% by weight of the cellulose ester having a low substitution degree.

As the cellulose esters, for example, there are exemplified esters of an organic acid such as a cellulose acetate, a cellulose butylate, and a cellulose propionate; esters of an inorganic acid such as a cellulose nitrate, a cellulose sulphate, and a cellulose phosphate; a mixed ester such as a cellulose acetate-propionate, a cellulose acetate-butylate, a cellulose acetate-phthalate, and a cellulose nitrate-acetate. The cellulose esters may be employed solely or in combination. Of the cellulose esters, the esters of an organic acid, particularly, the cellulose acetate is preferred.

The cellulose ester having a low substitution degree contained in the cellulose ester composition has an average substitution degree of not more than 2.15, preferably, 1.0-2.15, and more preferably 1.1-2.0 or so. In the case that the substitution degree is less than 1.0, water resistance lowers in the surface of the particle-state fertilizer and, in the case of exceeding 2.15, there remarkably lower not only a compatibility with other components and fluidity in melting, but also biodegradability.

It is to be noted that the substitution degree DS in the cellulose ester, as an example in the case of the cellulose acetate, when a combined acetate acid % (acetylated degree) is X, and Y is X/100, is calculated by the equation described below.

$$\text{Substitution degree } DS = (162 \times Y)/(60 - 42 \times Y)$$

Average polymerization degree of the cellulose ester is, for example, 50-250, and preferably 100-200 or so. In the case that the average polymerization degree is less than 50, mechanical properties lower in the surface of the particle-state fertilizer and, in the case of exceeding 250, there lower not only fluidity and coatability, but also biodegradability.

The average polymerization degree (DP) of the cellulose ester can be measured with an Ostwald viscometer. For example, a dropping time from the viscometer is measured at 25°C in relation to a solvent solution of the cellulose ester and the solvent, respectively, and the average polymerization degree can be calculated by the equations (1)-(4) described below.

$$\eta_{rel} = t/t_0 \tag{1}$$

$$\ln \eta_{rel} = 2.3026 \times \log \eta_{rel} \tag{2}$$

$$[\eta]=(\ln \eta_{rel})/C \qquad\qquad (3)$$

$$DP=[\eta]/9 \times 10^{-4} \qquad\qquad (4)$$

In the formula, "t" is the dropping time (second) of a cellulose ester solution, "$t_0$" is the dropping time (second) of the solvent, and C is the concentration (g/L) of the cellulose ester in the solution.

In the above-mentioned method, acetone is often employed as a solvent, and the concentration of the cellulose ester in the solution is usually approximately 0.2% (w/v).

The cellulose ester having a low substitution degree, if it is a cellulose ester having an excellent biodegradability, is not particularly limited in the categories. Such the cellulose ester having a low substitution degree includes, for example, a cellulose ester in which not less than 60% by weight, and preferably not less than 65% by weight (for example, 65-100%) is decomposed after 4 weeks based on the amount of carbon dioxide gas produced in the above-mentioned experimental method according to the ASTM 125209-91.

In the measurement of biodegradability, as an active sludge, there can be employed an active sludge in an installation for treating a municipal sewage. It is to be noted that a decomposition ratio (%) of the cellulose ester can be calculated from a proportion versus total carbon amount before decomposing after converting the amount of carbon dioxide produced into the decomposed carbon amount.

Equivalent ratio, which is a ratio of the amount of sulfuric acid remained in the cellulose ester having a low substitution degree with respect to alkaline metals or alkaline earth metals, largely affects to biodegradability of the cellulose ester having a low substitution degree. The cellulose ester having an excellent biodegradability contains, for example, a cellulose ester having the equivalent ratio of alkaline metals or alkaline earth metals with respect to the amount of sulfuric acid remained of 0.1-1.1, preferably 0.5-1.1 or so.

In the case that the equivalent ratio of alkaline metals or alkaline earth metals is less than 0.1, heat resistance becomes lower and, in the case of exceeding 1.1, biodegradability lowers in the cellulose ester.

It is to be noted that the above-mentioned sulfuric acid is derived from sulfuric acid employed as a catalyst in the preparation of the cellulose ester.

Sulfuric acid remains as not only a free sulfuric acid but also a salt of sulfuric acid, sulphoacetate, and a sulfuric acid ester, and it may be free.

Total amount of sulfuric acid remained in the cellulose ester is usually $1.8 \times 10^{-3}$-$6.0 \times 10^{-2}$% by weight (0.005-0.1% by mol) or so based on $SO_4^{2-}$.

As the above-mentioned alkaline metals, there are included lithium, potassium, and sodium, etc., and as alkaline earth metals, there are included magnesium, calcium, strontium, and barium, etc. The biodegradable cellulose ester composition to be employed in the present invention may be a composition in which a biodegradability is improved, and the composition contains a cellulose ester having the average substitution degree of not more than 2.15, and the average polymerization degree of 50-250, and the equivalent ratio of the alkaline metals or alkaline earth metals with respect to sulfuric acid remained of 0.1-1.1.

The biodegradable cellulose ester composition to be employed in the present invention may be comprised the cellulose ester having a low substitution degree alone, and may contain a plurality of cellulose esters having a different substitution degree so far as it contains the cellulose ester having a low substitution degree. A composition comprised the cellulose esters having a different substitution degree contains the above-mentioned cellulose ester having a low substitution degree and other cellulose esters (hereinafter, merely referred to as a cellulose ester having a high substitution degree, so far as not particularly mentioned). The substitution degree of the above-mentioned cellulose ester having a high substitution degree may be different from the substitution degree of the cellulose ester having a low substitution degree, and substituted groups may be identical to or different from substituted groups in the cellulose ester having a low substitution degree. The cellulose ester having a high substitution degree includes a cellulose ester having a poor biodegradability (for example, a cellulose ester having the substitution degree of not less than 2.2, and particularly, not less than 2.4).

Further, a preferred cellulose ester having a high substitution degree often contains the identical substituted groups similar to the substituted groups in the cellulose ester having a low substitution degree, particularly, it often contains the identical substituted groups. The above-mentioned identical or similar substituted groups, in the case that the cellulose ester having the low substitution degree is a cellulose acetate, include a residual group of an organic acid ester having a carbon number of 1-4 or so.

The composition containing a plurality of cellulose esters having a different substitution degree is characterized in that even though the content of the cellulose esters having a low substitution degree is a small amount, biodegradability can be elevated in the cellulose esters. The content of the cellulose esters having a low substitution degree is not less than 10% by weight, preferably 10-90% by weight, and more preferably 10-75% by weight (for example, 10-50% by weight) or so based on the total cellulose esters. In the content of the cellulose esters having a low substitution degree of not less than 10% by weight, there can be jumpingly improved a biodegradability in a cellulose ester having a poor biodegradability. In the cellulose ester composition containing not less than 10% by weight of the cellulose ester having a low substitution degree as a cellulose ester component, it decomposes in not less than 20% by weight, preferably not less than 25% by weight after 4 weeks based on the amount of carbon dioxide gas produced in the experimental method according to the ASTM 125209-91. It is to be noted that the cellulose ester composition can be biologically decomposed within a short time of period with an increase of the content of the cellulose esters having a low substitution degree.

A mechanism of biodegradation is not distinct in such the composition. However, it is guessed that there are cultivated microorganisms which do not inherently have degradability for the cellulose esters having a high substitution degree by allowing to contain a small amount of the cellulose esters having a low substitution degree, resulting in that the cellulose esters having a high substitution degree can be also decomposed.

It is to be noted that the cellulose esters can be prepared by a common method regardless of high or low substitution degree.

Further, the substitution degree of the cellulose esters may be adjusted by a one-stage reaction in a reaction of an organic acid or an acid anhydride with a cellulose and, the substitution degree may be adjusted by hydrolysis after the preparation of the cellulose esters having a high substitution degree (for example, 3-substituted esters).

Substances to be employed as the coating material B in the present invention include at least one or more substances selected from the group of an olefine polymer, a copolymer containing an olefine, a polyvinylidene chloride, a copolymer containing vinylidene chloride, a diene-based polymer, waxes, a petroleum resin, a natural resin, a cellulose acetate resin, a polycaprolactone, oils & fats, and a modified compound thereof.

The above-mentioned olefine polymer includes a polyethylene, a polypropylene, an ethylene-propylene copolymer, a polybutylene, a butene-ethylene copolymer, a butene-propylene copolymer, and a polystyrene, etc. The copolymer containing an olefine includes an ethylene-vinylacetate copolymer, an ethylene-acrylic acid copolymer, an ethylene-acrylate copolymer, an ethylene-methacrylic acid copolymer, an ethylene-methacrylate copolymer, an ethylene-carbon monoxide copolymer, and an ethylene-vinylacetate-carbon monoxide copolymer, etc. The copolymer containing vinylidene chloride includes a vinylidene chloride-vinylchloride-based copolymer, and the diene-based copolymer includes a butadiene polymer, an isoprene polymer, a chloroprene polymer, a butadiene-styrene copolymer, an EPDM polymer, and a styrene-isoprene copolymer, etc. Waxes include a bees wax, a wood wax, and a paraffin, etc. The natural resin includes a natural rubber and rosins, etc. The cellulose acetate resin includes a diacetate having an average substitution degree of 2.5, and triacetates having an average substitution degree of 2.9. The polycaprolactone is a polymer prepared by a ring-opening addition polymerization of $\varepsilon$-caprolactone, and it has a molecular weight of not less than 10,000, and preferably 50,000-100,000. The oils & fats and the modified compound thereof include a hydrogenated oil, a solid fatty acid, and a metallic salt thereof, etc.

In the present invention, the weight percent of the coating material with respect to particle substances to be coated, that is, a coating ratio preferably ranges in 2-20%. Further, the coating material A is employed in a range of 10-100% (by weight), and preferably 50-100% based on the total of the coating materials, and the coating material B is employed in a range of 0-90% (by weight), and preferably 0-50% based on the total of the coating materials. It is to be noted that there is optionally employed a third coating material component which can be mixed.

As such the third coating material component, there are enumerated a surfactant which is an agent for adjusting an elution, talc, calcium carbonate, and a metal oxide, etc., which are an insoluble filler. It is required that a mixture thereof is homogeneously mixed. If not homogeneous, a continuous phase of the coating materials is deteriorated by biasing of a part of fine particles, resulting in that an effect as a coating layer is not shown.

In the present invention, a fourth coating material component is further optionally employed. As such the fourth coating material component, for example, there are enumerated accelerators for photo-decomposition and accelerators for biodegradation, agents for adjusting an elution, fillers, and cellulose powder, etc., and the components are employed by homogeneously dispersing.

As the accelerators for photo-decomposition, for example, there are exemplified benzoins, benzoin alkyl ethers, benzophenones and derivatives thereof such as benzophenone, and 4,4'-bis(dimethylamino)benzophenone; acetophenones and derivatives thereof such as acetophenone and $\alpha,\alpha$-diethoxyacetophenone; quinones; thioxthantones; a photo-exiting agent such as phthalocyanine, an anatase-type titanium oxide, an ethylene-carbon monoxide copolymer, and a sensitivity accelerator of an aromatic ketone with metallic salts, etc. The accelerator for photodecomposition may be employed solely or in combination.

By the use of the accelerator for photo-decomposition, the cellulose ester can be photo-depolymerized. For that reason, biodegradability can be elevated in combination with photodegradability.

As the accelerators for biodegradation, there are exemplified, for example, an organic acid such as an oxo acid (for example, an oxo acid having a carbon number of 2-6 or so such as glycolic acid, lactic acid, citric acid, tartaric acid, and malic acid), a saturated dicarboxylic acid (for example, a lower saturated dicarboxylic acid having a carbon number of 2-6 or so such as oxalic acid, malonic acid, succinic acid, succinic anhydride, and glutaric acid); a lower alkyl ester of the organic acids with an alcohol having a carbon number of 1-4 or so. A preferred accelerator for biodegradation includes citric acid, tartaric acid, and malic acid which are an organic acid having a carbon number of 2-6 or so. The accelerators for biodegradation are employed solely or in combination.

Further, as the accelerators for biodegradation, there are also included a hydrolysis enzyme such as biodegradable enzyme, for example, lipase, cellulase, and esterase, etc. The biodegradable enzyme can be employed by suspending or dispersing in a solvent. It is to be noted that the above-mentioned accelerators for photodegradation can be employed together with the accelerators for biodegradation. Further, although cellulose powder can be mixed in order to prevent an aggregation of coated particles, it does not require because of a melting point of not less than 140°C in the cellulose acetate having a low substitution degree in the present invention.

In the present invention, the coating material is dissolved or dispersed in a solvent such as chlorinated hydrocarbons, and it is sprayed on the surface of the particle-state fertilizers while maintaining at a high temperature, and a high speed heated air stream is simultaneously blown to instantly dry and coat, whereby, the particle-state fertilizer can be obtained. Also, acetone can be also employed which is readily obtained.

As illustrated hereinabove, according to the first aspect of the present invention, in the particle-state fertilizer, a duration period of a fertilizing effect can be controlled, and the coating layer is broken down and decomposed by microorganisms in soils after elution of fertilizer components, and it does not remain in soils. Further, residual components after planting period of harvests disappear by degradation and decomposition of the coating layer, and there is an effect that there becomes easy a management for supplying fertilizers.

Hereinafter, there are illustrated embodiments for carrying out the second aspect of the present invention.

The resin composition to be employed in the present invention comprises a mixture composed of a polycaprolactone and a synthetic aliphatic polyester resin which are a primary polymer component, and a metallic salt or an amide of a fatty acid and, further, there are mixed a liquid-state lubricant, finely-powdered silica and/or starch.

In the case that there are mixed the metallic salt or an amide of a fatty acid, a liquid-state lubricant, finely-powdered silica and the starch, the mixture is called "resin", which is composed of a polycaprolactone and a synthetic aliphatic polyester resin, and mixing proportion is shown based on the "resin".

In the resin composition, melt flow index (MI) is preferably 0.5-25 g/10 minute, and more particularly 1-5 g/10 minute which is measured at 190°C and a load of 2160 g.

Lactone resin may be a homopolymer such as a polycaprolactone and a polyvarelolactone, and also a copolymer, and there is preferred a resin which does not soften at ordinary temperatures. From the viewpoint, there is preferred a polycaprolactone having a high molecular weight and a softening point of not less than 55°C, in which stable properties are readily obtained.

Hereinafter, a polycaprolactone is illustrated as an example.

As the polycaprolactone, there can be employed one having a number average molecular weight of 10,000-200,000, and preferably 10,000-100,000.

The polycaprolactone having the above-mentioned molecular weight has a relative viscosity of 1.15-2.80, particularly, preferably 1.50-2.80 defined by JIS K6726.

In the present invention, the synthetic aliphatic polyester resin is an aliphatic polyester resin obtained in a condensation-polymerization system. Hereinafter, the synthetic aliphatic polyester resin is merely abbreviated as an aliphatic polyester resin, and in the case of a resin produced in nature, it is clearly illustrated so.

Although there is not particularly limited the synthesized aliphatic polyester resin to be employed in the present invention, there is employed one as described in JP-A-09067513.

That is, there is preferred a resin having a melting point of not less than 100°C, thermoplasticity, and a relatively not high biodegradability. There are exemplified a polyester resin obtained by succinic acid and 1,4-butanediol, a polyester resin obtained by succinic acid and ethyleneglycol, a polyester resin obtained by oxalic acid and neopentylglycol, a polyester resin obtained by oxalic acid and 1,4-butanediol, and a polyester resin obtained by oxalic acid and ethyleneglycol, etc. There is, particularly, preferred the polyester resin obtained by succinic acid and 1,4-butanediol. Likewise, an aliphatic polyester resin containing urethane bonds is also included in the synthesized aliphatic polyester resin to be employed in the present invention, which is obtained by highly-polymerizing the above-described aliphatic polyester resin using, preferably, an aliphatic diisocyanate compound. As the aliphatic diisocyanate compound, there are exemplified hexamethylene diisocyanate, ridine diisocyanate methylester {$OCN-(CH_2)_4-CH(-NCO)(-COOCH_3)$}, and trimethylhexamethylene diisocyanate, etc. Of those, hexamethylene diisocyanate is preferred. Further, in the aliphatic polyester resin containing urethane bonds, a number-average molecular weight ranges in preferably not less than 20,000, and more preferably not less than 40,000. As the polyester resin synthesized by an aliphatic dicarboxylic acid having a low molecular weight and an aliphatic diol having a low molecular weight, or the polyester resin highly-polymerized by the aliphatic diisocyanate compound, "Bionolle" is sold in a trade name by Showa Kobunshi, Co. Ltd.

As other aliphatic polyester resins, there are enumerated a synthesized polylactic acid, a polyamide ester resin synthesized by $\varepsilon$-caprolactone and $\varepsilon$-caprolactam, and a polyaminoacid resin, etc.

The aliphatic polyester resin to be employed has a number average molecular weight of not less than 20,000 from not less than 200,000, and preferably not less than 40,000 based on a standard polystyrene by a GPC.

The above-mentioned polycaprolactone and aliphatic polyester resin are employed by mixing.

Mixing ratio by weight of the polycaprolactone with respect to the aliphatic polyester resin is 70-5% by weight of the polycaprolactone with respect to 30-95% by weight of the aliphatic polyester resin. Preferably, mixing ratio by weight of the polycaprolactone is not more than 60% by weight and, particularly, preferably 40-10% by weight.

In the case that the mixing amount of the aliphatic polyester resin exceeds 90% by weight, biodegradability occasionally delays and, contrarily, in the case of less than 30% by weight, heat resistance becomes poor when molded, for example, as a film.

In the case that the mixing proportion of the polycaprolactone exceeds the above-mentioned proportion, mechanical properties in a molded article become insufficient in the case of high temperatures. However, depending upon uses, even in the case that it becomes slightly outside of the above-mentioned proportion, it is occasionally no-problem.

As the metallic salt of a fatty acid to be employed in the present invention, there are preferably enumerated metallic salts having a carbon number of not less than 10 such as barium stearate, calcium stearate, zinc stearate, aluminum stearate, magnesium stearate, and a mixture thereof. Of those, calcium stearate is particularly preferred in view of a mold release property.

As the amide of a fatty acid to be employed in the present invention, there are enumerated monoamides of a saturated fatty acid such as an amide of lauric acid, an amide of palmitic acid, an amide of a palmitic acid having a high purity, an amide of stearic acid, a refined amide of stearic acid, an amide of a stearic acid having a high purity, an amide of behenic acid, an amide of behenic acid having a high purity, an amide of hydroxystearic acid, and an amide of oleic acid; bisamides of a saturated fatty acid such as bisamide of methylenebis stearic acid, bisamide of ethylenebis capric acid, bisamide of ethylenebis lauric acid, bisamide of ethylenebis stearic acid, bisamide of ethylenebis isostearic acid, bisamide of ethylenebis hydroxystearic acid, bisamide of ethylenebis behenic acid, bisamide of hexamethylenebis stearic acid, bisamide of hexamethylenebis behenic acid, bisamide of hexamethylenebis hydroxystearic acid, bisamide of N,N'-distearyladipic acid, and bisamide of N,N'-distearylsebasic acid; monoamides of an unsaturated fatty acid such as monoamide of oleic acid, monoamide of a refined oleic acid, and monoamide of licinoleic acid; bisamides of an unsaturated fatty acid such as bisamide of ethylenebis oleic acide, bisamide of hexamethylenebis oleic acid, bisamide of N,N'-dioleiladipic acid, bisamide of N,N'-dioleilsebasic acid; substituted amides such as amide of N-stearylstearic acid, amide of N-oleiloleic acid, amide of N-stearyloleic acid, amide of N-oleilstearic acid, amide of N-stearyleruic acid, and amide of N-oleilpalmitic acid; amide of methylol stearic acid; methylol amides such as amide of methylol behenic acid; aromatic bisamides such as bisamide of N,N-distearyl isophthalic acid and bisamide of methaxylilene bistearylic acid.

These metallic salts or amides of a fatty acid are a solid lubricant at ordinary temperatures. These also show an effect as a mold release property.

Of the above-mentioned amides of a fatty acid, there are preferred amide of ethylenebis stearic acid, amide of stearic acid, amide of oleic acid, and amide of erucic acid because uses of products in the present invention range over a wide scope, safeness is high, and those are registered in FDA (USA Food and Drug Administration).

In the case of selecting the amides of a fatty acid, it is required that there is selected an amide having a melting point lower than those depending upon a melting point of a variety of aliphatic polyester resins.

For example, there is selected an amide of a fatty acid having a melting point of not more than 160°C in consideration of a melting point of the synthetic aliphatic polyester resins.

In the case of selecting the metallic salts of a fatty acid, calcium stearate is particularly preferred because of a large effect as an internal lubricant or a mold release agent.

The metallic salts and amides of a fatty acid may be employed solely or in combination of both, and mixing proportion thereof ranges in 0.2-5 parts by weight, and desirably 0.3-1.5 part by weight based on the 100 parts by weight of primary polymer components.

In the case of not more than 0.2 part by weight, there is small an effect for preventing a blocking and, on the other hand, in the case of more than 5 parts by weight, slipping of the film becomes exceedingly large and, there become worse a printing applicability and adhesive properties, etc.

As the liquid-state lubricants, there is employed a lubricant having a melting point of not more than 70°C, and preferably, a liquid-state one at ordinary temperatures.

As the liquid-state lubricants, there are enumerated paraffin waxes; stearyl alcohol; stearic acid; stearates such as butyl stearate; esters of stearic acid such as a monoglyceride of stearic acid, pentaerythritol tetrastearate, and stearyl stearate, etc.

Liquid paraffin, which is most desired as the liquid-state lubricant, is very safe because an acute oral toxicity (rat) LD50 is 5 g/kg, and it is approved as an additive for foods in Food Hygiene Law, it is a very favorable material.

In the case that the liquid-state lubricant is mixed, although it can be practically employed when a resin composition containing the resin has a higher melting point than a melting point in the respective solid lubricants, there is most preferably employed the liquid paraffin which is a liquid at room temperatures in view of handling.

The polycaprolactone and the aliphatic polyester resin, which are primary polymer components, are usually supplied in the form of pellets or beads. When there is mixed the finely-powdered silica having an exceedingly small bulk density, the surface of the pellets or beads must be wetted by all means.

Addition amount of the liquid paraffin, which is a wetting agent, is 0.1-3 parts by weight, and desirably 0.2-0.7 part by weight based on 100 parts by weight of total amount of the polycaprolactone and the aliphatic polyester resin. In the case of exceeding 3 parts by weight, it becomes difficult to stably prepare because of being sticky in an inside of a tumbler and, in the case of less than 0.1 part by weight, an effect is low.

The finely-powdered silica may be a silica prepared by a wet method, and even a silica prepared by hydrolysis at high temperatures in an oxygen-hydrogen flame of silicone tetrachloride and, there is preferred a silica having a particle diameter of not more than 50 nm, and it is thermally kneaded into a composition of the thermoplastic polycaprolactone and aliphatic polyester resin in the present invention. At that time, secondarily-aggregated particles are loosened by a large shear stress, resulting in that there is shown an effect for preventing a blocking in a film which is a product.

Addition amount of the finely-powdered silica ranges in 0.1-3 parts by weight based on 100 parts by weight of the resins.

As the starch to be employed in the present invention, there are enumerated raw starch, processed starch, and a mixture thereof. As the raw starch, there are enumerated corn starch, potato starch, sweet potato starch, wheat starch, cassava starch, sago starch, tapioca starch, rice starch, bean starch, arrowroot starch, bracken starch, lotus rhizome starch, and water chestnut starch, etc.

As the processed starch, there are enumerated physically-modified starch ($\alpha$-starch, classified amirose, and moisture- and thermally-treated starch); enzyme-modified starch (hydrolyzed dextrin, enzyme-modified dextrin, and amirose, etc.); chemically-modified starch (acid-treated starch, starches oxidized by hydrochloric acid, and dialdehyde starch); derivatives of the chemically-modified starch (esterified starches, etherified starch, cationized starch, and crosslinked starch, etc.), etc.

Of the above descriptions, as the esterified starch, there are enumerated acetic acid-esterified starch, succinic acid-esterified starch, nitric acid-esterified starch, phosphoric acid-esterified starch, urea-phosphoric acid-esterified starch, xantgenic acid-esterified starch, and acetoacetic acid-esterified starch, etc.; as the etherified starch, there are enumerated allyl-etherified starch, methyl-etherified starch, carboxymethyl-etherified starch, hydroxyethyl-etherified starch, and hydroxypropyl-etherified starch, etc.; as the cationized starch, there are enumerated reaction products of starch with 2-diethylaminoethyl chloride, reaction products of starch with 2,3-epoxypropyl trimethyl ammonium chloride, etc.; as the crosslinked starch, there are enumerated starch crosslinked by formaldehyde, starch crosslinked by epichlorohydrin, starch crosslinked by phosphoric acid, and starch crosslinked by acrolein, etc.

The above-mentioned starch is added in a range of 10-80 parts by weight, desirably 25-50 parts by weight based on 100 parts by weight of the resins.

In the above-mentioned resins, there can be optionally added a decomposition accelerator, resin components (an ethylene copolymer and other polyolefins, hydrogenated styrene-butadiene rubbers, polyurethanes, polyamides, and polyhydroxybutylates, etc.) other than the polycaprolactone and the aliphatic polyester resin, natural polymers (polysaccharide-based polymers, cellulose-based polymers, and protein-based polymers, etc.) other than starches, finely-powdered particles having a diameter of not more than 50 microns prepared from papers, thermal stabilizers, extenders, fillers such as calcium carbonate, lubricants other than the lubricants described hereinabove, coloring agents, flame retardants, water resistants, self-oxidants, ultraviolet ray stabilizers, crosslinking agents, anti-bacterial agents, herbicides, anti-oxidants, and deodorants, etc.

Further, as a modifier for starch, there can be also added ureas, hydroxides of alkaline earth or alkaline metals, and a mixture thereof.

As the decomposition accelerator, there are enumerated photo-degradation accelerators and biodegradation accelerators.

As the photo-degradation accelerators, there can be employed the same ones described in the first aspect of the present invention.

As the biodegradation accelerators, there can be employed the same ones described in the first aspect of the present invention, and activated carbons prepared from coconut shells, etc.

There are not particularly limited methods for obtaining the resin composition of the present invention comprising the above-mentioned formulation.

For example, in order to obtain the above-mentioned composition, there are mixed the polycaprolactone and the aliphatic polyester resin which are primary polymer components, and optionally the liquid-state lubricant while agitating in a tumbler for 10-20 minutes. Subsequently, the metallic salts or amides of a fatty acid are added, the finely-powdered silica is added and, further, starch is added, and then mixing is carried out while agitating for 20-30 minutes. Subsequently, kneading is carried out while melting at 140-210°C with a single or twin-screw extruder to obtain powder or pellets of the resin composition.

The powder-like or pellet-like resin composition as obtained hereinabove can be molded into a variety of shapes by a variety of conventional molding methods, and it can be employed in a variety of uses.

For example, it is molded into a film by an inflation method.

Hereinafter, there is shown a molding method for an inflation film.

First of all, it is supplied into an extruder equipped with a circular die, followed by melt kneading at temperature of 180°C and by extruding in a tubular state from a slit of the circular die. For example, extruding diameter in the extruder is 40-65 mm or so, the ratio (L/D) of length/diameter is 26-32, and the diameter of the circular die is 50-100 mm, and a gap ranges in preferably 0.5-1.5 mm in the die slit.

The tubular-state film extruded is expanded until a fixed diameter in a blowing ratio (tube diameter/die diameter) of not less than 2 by pressure of a gas introduced from a gas-supplying tube which is inserted through the die, and then it is drawn in a fixed speed by rolls for nipping.

In the present invention, although a film can be stably prepared regardless of temperatures of resins extruded from the circular die, when outside temperatures are fairly high such as in a summer season, there can be obtained a more complete film without any blocking by introducing a chilled air having not more than 20°C from the gas supplying tube.

Thus-obtained film from the biodegradable resin composition of the present invention can be employed in a variety of uses such as wrapping materials (a film and a sheet etc.), agricultural materials (a multi-film for agriculture, binding tapes including flat yarns, and a film for wrapping root of plants, etc.), household materials (a backsheet for diapers, shopping bags, bags for garbages, bags for removing water, and compost bags, etc.) as a single layer or a laminate with papers or non-woven clothes, etc.

As illustrated hereinabove, according to the second aspect of the present invention, there can be obtained a resin composition, a molded article, and a film, particularly, an inflation film which are readily decomposed by biodegradation or degradation in natural circumstances within a short time of period.

In the method for preparing the inflation film, even though temperatures in extruding and temperatures of a tube when passing through the rolls for nipping are not set up at a specified temperature, and moreover, even though the blowing ratio and drawing ratio are not controlled within a specified range, blocking is not caused, and there can be obtained a tubular film which is excellent in outer appearances thereof and, further, which is well-balanced among biodegradability, a heat-sealing property, and mechanical strength, etc. The inflation film can be employed in a variety of uses such as wrapping materials (a film and a sheet etc.), agricultural materials (a multi-film for agriculture, binding tapes including flat yarns, and a film for wrapping root of plants, etc.), household materials (a backsheet for diapers, shopping bags, bags for garbages, bags for removing water, and compost bags, etc.) as a single layer or a laminate with papers or non-woven clothes, etc.

Hereinafter, there are illustrated embodiments for carrying out the third aspect of the present invention.

The resin composition to be employed in the present invention is the same as described at the corresponding items in the second aspect of the present invention, and powder or pellets of the resin composition are likewise obtained as described in the second aspect of the present invention.

The powder or pellets of the resin composition obtained as described hereinabove can be molded as a film by a variety of conventional molding methods such as an inflation method and a T-die method.

For example, the molding methods of the film by the inflation method are the same as at the corresponding items in the second aspect of the present invention.

Although thickness of the films is different depending upon uses, there can be employed films having 10-100 μm in bags for garbages in a household, and films having 50-200 μm in a large-size one in which contents having heavy weight are packed.

Tear strength of the film at ordinary temperatures is preferably not less than 450 kg/cm$^2$ in view of functions as the bags for garbages, and tear strength of the film at 80°C is preferably not more than 10 kg/cm$^2$ in consideration of degradability by biodegradation in a compost apparatus. In the bags for garbages provided in the present invention, the tear strength can be readily controlled in a preferred range of the tear strength by adjusting the thickness. It is to be noted that the tear strength is measured according to JIS K7113 (No. 2-type test piece).

In the case that the films are plain as in a film by the T-die method, there is folded up the film cut into an appropriate size, for example, a bag for garbages can be obtained by adhering side portions. In the case that the films are cylindrical as in a film by the inflation method, a bag for garbages can be obtained by adhering bottom portions.

In the above-mentioned method for adhering, there may be a thermal melting method or a method using an adhesive. Further, in the case of a bag for garbages for removing water, many openings for removing water are cut in the surface thereof. The openings may be cut at portions of both sides or one side, an upper portion, a bottom portion, and all surfaces.

Diameter of the openings is 0.1-5 mm, and preferably 1-3 mm, and the number of the openings is 10-2000 pieces, preferably 100-1500 pieces per 10 square centimeter.

Shape of the openings or a mutual relation of portions is not particularly limited, so far as strength and function as a bag for garbages are maintained within a desired range. The shape is, for example, a round shape, the mutual relation of portions may be regularly arranged upward or downward, and those may be diagonally arranged on the bias, and those may be irregularly arranged.

Thus-obtained bag for garbages can be employed in order to remove water in kitchen garbages by placing at an inside of a container for setting, which is placed at a drain hole in a kitchen corner.

The bag for garbages of the third aspect of the present invention is effective for packing the kitchen garbages, and the bag in which the kitchen garbages are packed may be thrown into a compost vessel as it is, and it may be changed to a compost together with the kitchen garbages, and further, it may be burned by gathering using a garbages car.

As illustrated hereinabove, according to the third aspect of the present invention, there can be obtained a bag for garbages and a bag for garbages for removing water which can be readily decomposed by biodegradation or degradation within a short time under natural circumstances.

Examples

Hereinafter, although the present invention is more specifically illustrated by Examples, the present invention is not limited by the Examples.

The first aspect of the present invention is illustrated.

[Examples I-1 to I-4 and Comparative Example I-1]

(1) Apparatus and Method for preparing

Figure I-1 shows an apparatus in a preferred embodiment of the present invention. Blowing column 1 has a column diameter of 200 mm, height of 180 mm, diameter of an opening for blowing air of 42 mm, and which has a hole 2 for throwing a fertilizer and a hole 3 for exhausting a waste gas. Air for blowing is blown from a blower 10, and it reaches the blowing column through an orifice flow meter 9 and a heat exchanger 8. Flow volume is controlled at the flow meter 9, temperature is controlled at the heat exchanger 8, and waste gas is exhausted from the hole 3 for exhausting to an outside of the column.

A particle-state fertilizer to be supplied for coating is thrown from the hole 2 for throwing a fertilizer while streaming a fixed heat air to form a blowing stream. Treatment for coating is carried out by spraying the a solution containing a cellulose acetate composition having a low substitution degree through a nozzle 4 for a liquid against the blowing stream after adjusting temperature of particles for coating to a fixed temperature.

Preparation of a solution for coating is carried out while agitating in the vicinity of a boiling point of solvent after supplying a fixed amount of a coating material and solvent into a liquid tank 11. The solution for coating is supplied into the nozzle 4 by a pump 5, and keeping warmth is sufficiently conducted in order to maintain a temperature in a system.

After supplying the fixed solution for coating, the pump 5 is stopped, and then the blower 10 is stopped. Fertilizer coated is taken out of a hole 7 for taking out. 6 is a valve.

In the Figure I-1, $T_1$, $T_2$, and $T_3$ are a thermometer, and SL is steam. It is to be noted that a particle-state fertilizer was coated while maintain the following basic conditions in all Examples and Comparative Examples.

Nozzle for a liquid; opening of 0.8 mm, a Fullcon type
Amount of heat air; 4 $m^3$/min
Temperature of heat air; 100°C
Fertilizer; Potassium-ammonium phosphate-nitrate having 5-7 meshes
Thrown amount of fertilizer; 5 kg
Concentration of a coating solution; Solid content of 5% by weight
Feed amount of a coating solution; 0.5 kg/minute
Coating period; 10 minutes
Coating ratio (based on fertilizer); 5.5% by weight (containing components of surfactants)
Solvent; Tetrahydrofran (abbreviated as THF in Table), trichloroethylene (abbreviated as Trichlene in Table)
EVA; [Ultracene (an ethylene-vinyl acetate having vinyl acetate content of 32)] manufactured by Toso, Ltd.
Cellulose acetate having a low substitution degree; [acetylated degree of 51.0, viscosity of 98 cps in 6% acetone solution] manufactured by Daicel Chemical Industries, Ltd.
Diacetate; [acetylated degree of 55.0, viscosity of 100 cps in 6% acetone solution] manufactured by Daicel Chemical Industries, Ltd.
Triacetate; [acetylated degree of 60.0, viscosity of 300 cps in 6% methylene chloride solution] manufactured by Daicel Chemical Industries, Ltd.

PCL; Polycaprolactone [PCL-H7] manufactured by Daicel Chemical Industries, Ltd

(2) Formulation of a coating layer and Biodegradability Test

According to the above-mentioned method for the preparation, coatings containing potassium-ammonium phosphate-nitrate were prepared which have formulation in respective coating layers as shown in Table I-1. After that, two sides were cut in relation to every particle of 50 particles of coated samples, and then those were immersed in water to remove internal fertilizing components. After drying, those were finely crushed, and decomposition ratio was measured according to JIS K6950 (a biodegradability experimental method under airing by an active sludge). Active sludge employed was an active sludge sent from a municipal drainage in Himeji city.
Table I-1 shows results in Examples I-1 to I-4 and Comparative Example I-1.

Table I-1

| | Coating material A | | Coating Material B | | Coating Material C | | Solvent | Biodegradability after 28 days |
|---|---|---|---|---|---|---|---|---|
| | **Formulation of Coating Materials** | | | | | | | |
| | | Same as left | | Same as left | | Same as left | | |
| Comparative Example 1-1 | none | 0 | EVA | 50 | Talc | 50 | Trichlene | 0 |
| Example 1-1 | Cellulose acetate having a low substitution degree | 50 | None | 0 | Same as above | 50 | THF | 80 |
| Example 1-2 | Cellulose acetate having a low substitution degree | 30 | PCL | 20 | Same as above | 50 | THF | 80 |
| Example 1-3 | Cellulose acetate having a low substitution degree | 30 | Diacetate | 20 | Same as above | 50 | THF | 50 |
| Example 1-4 | Cellulose acetate having a low substitution degree | 30 | Triacetate | 20 | Same as above | 50 | THF | 40 |

The second and third aspects of the present invention are illustrated.

It is to be noted that "%" and "part" are based on the weight so far as not being particularly noticed.

Melt Index is a value at 190°C and a load of 2160 g.

(Preparation of Resin composition)

[Example II-1]

There were supplied 40 parts of Polycaprolactone, 60 parts of a poly-1,4-butanediol succinate, 0.5 part of a liquid paraffin, and 1 part of amide of stearic acid into a ventilation type twin-screw extruder (Diameter of 40 mm), followed by being extruded at a dice temperature of 180°C to obtain pellets of a resin composition.
Melt Index was 3.5 g/10 minutes in the resin composition.

[Example II-2]

There were likewise employed as in the Example II-1 40 parts of Polycaprolactone, 60 parts of a poly-1,4-butanediol succinate, 0.5 part of a liquid paraffin, and 0.8 part of amide of stearic acid amide, and 0.8 part of Aerojil#200 (manufactured by Nihon Aerojil, Ltd.) to obtain pellets of a resin composition.
Melt Index was 3.9 g/10 minutes in the resin composition.

[Example II-3]

There were likewise employed as in the Example II-1 40 parts of Polycaprolactone, 60 parts of a poly-1,4-butanediol succinate, 0.5 part of a liquid paraffin, and 0.5 part of amide of stearic acid, and 0.5 part of Aerojil#200 (the same as above) to obtain pellets of a resin composition.
Melt Index was 3.7 g/10 minutes in the resin composition.

[Example II-4]

There were likewise employed as in the Example II-1 40 parts of Polycaprolactone, 60 parts of a poly-1,4-butanediol succinate, 0.5 part of a liquid paraffin, and 0.5 part of amide of stearic acid, 0.5 part of Aerojil#200 (the same as above), and 50 parts of a corn starch to obtain pellets of a resin composition.
Melt Index was 2.5 g/10 minutes in the resin composition.

[Film Preparation Example II]

A film was prepared by an inflation method under the following molding conditions using the resin composition obtained in the Example II-1.

Molding conditions

Extruder: Extruder having a diameter of 40 mm
Screw: L/D=28 , a screw for an MDPE (middle density polyethylene)
Die: Lip diameter of 150 mm, Die gap of 1 mm
Extruding temperature: 170°C at an end point of a cylinder
Die temperature: 170°C
Resin temperature (T1): 160°C
Screw revolution: 15 rpm
Discharging amount: 15 kg/hr
Blowing-up ratio: 2.5

In relation to an inflation film obtained, there were measured a blocking property, an outer appearance of the film, and biodegradability according to the following methods.
Blocking property: A tube (total length of 100 m) was drawn by folding through rolls for nipping in a drawing machine, and it was checked whether it can be readily pulled apart or not by fingers. Film which can be readily pulled apart was judged as the absence of blocking.
Outer appearance of the film: There were checked the presence or the absence of mingling of unmelted gels, streaks, and foaming, etc., and smoothness of the surface. Films having an excellent smoothness of the surface, in which mingling of unmelted gels, streaks, and foaming, etc., are not observed, were judged as the excellence.
Biodegradability: There was crushed the films obtained hereinabove, and those were supplied in an biodegradable test according to JIS K6950 for 28 days under a circumstance of a sludge in municipal drainage.

In relation to the resin compositions in the Examples II-2 to II-4, films were likewise prepared by the same conditions as in the Example II-1, and evaluations were likewise carried out.

Evaluation results of the Examples are shown in Table II-1.

Table II-1

| Examples | Presence or Absence of blocking in the films | Outer appearance of the film | Biodegradability |
|---|---|---|---|
| Example II-1 | none | excellent | 75% |
| Example II-2 | none | excellent | 73% |
| Example II-3 | none | excellent | 75% |
| Example II-4 | none | excellent | 85% |

[Examples II-5 to II-6 and Comparative Example II-1]

There were supplied 30 parts of Polycaprolactone, 70 parts of a poly-1,4-butanediol succinate, 0.2 part by weight of an epoxy resin "Epikote 828" (a solid-state resin comprising a glycidyl ether of bisphenol A manufactured by Yuka Shell Epoxy, Ltd.) which is an agent for preventing hydrolysis, and 0.4 part of calcium stearate (in Example II-5) and magnesium stearate (in Example II-6), respectively, into a 40-mm single-screw extruder, followed by being extruded (a die temperature of 180°C) to obtain pellets. Melt Index was 21.4 g/10 minutes and 25.0 g/10 minutes in the pellets, respectively. Also, surging was not caused. No. 1 type test pieces according to JIS K7113 were molded by injection molding (a mold temperature of 30°C, injection pressure of 40 kg/cm$^2$) using the pellets. In 10 shots of all samples, it was able to carry out molding without remaining the resin composition in the mold.

As Comparative Example II-1, Example II-5 was likewise followed without mixing a metallic salt of stearic acid. Melt Index was 2.7 g/10 minutes in the pellets. In 10 shots by injection molding, the resin composition was remained in a mold in relation to not less than 5 shots. As described above, the metallic salt of stearic acid showed an effect as a lubricant or a mold release agent in the resin composition of the present invention.

In Examples of the third aspect of the present invention, the resin compositions in the Examples II-1 to II-4 were employed as Preparation Examples III-1 to III-4.

Further, there was added Reference Preparation Example III-1 described below.

[Reference Preparation Example III-1]

There were employed 50 parts of 1-butene-modified linear low density polyethylene (MI: 0.8 g/10 minutes), 20 parts of 1-butene-modified very low density polyethylene (MI: 1.0 g/10 minutes), 30 parts of finely-powdered calcium carbonate treated by a saturated fatty acid to obtain pellets of a resin composition likewise as in Preparation Example III-1 (that is, Example II-1).

[Film Preparation Example III]

In relation to the resin compositions in the Preparation Examples 1-4 and Reference Preparation Example I, films were likewise prepared by the same conditions as in the Example II, and evaluations were likewise carried out.

[Examples III-1 to III-4 and Comparative Example III-1]

Longitudinal bags for garbages having width of 450 mm and length of 500 mm were prepared by heat sealing adhesion using the above-mentioned films. It is to be noted that tear strength was more than 450 kg/cm$^2$ at ordinary temperatures, and not more than 10 kg/cm$^2$ at 80°C.

In the Examples III-1 to III-4, there were employed bags for garbages obtained from the films in the Preparation Examples III-1 to III-4, respectively. In the Comparative Example III-1, there was employed a bag for garbages obtained from the film in the Reference Preparation Example III-1.

Food wastes produced in a kitchen of household were packed into the above-mentioned bags for garbages, and then the bags were thrown into an apparatus for compost, followed by treating at a temperature of approximately 80°C for 8 hours in the apparatus for compost.

As a result, although the bag for garbages in the Comparative Example III-1 was torn and shrunk, it was remained as it is, whereas there were decomposed the bags for garbages (the Examples III-1 to III-4) of the present invention.

[Comparative Example III-2]

A cellulose-made film having thickness of 30 μ was employed as a film to likewise prepare a bag for garbages as in the Example I, and food wastes in a kitchen were filled up to compare a biodegradability. Although the bag for garbages in the Comparative Example 2 was torn and shrunk, it was almost remained as it is.

[Example III-5]

Openings having diameter of 1 mm were cut at a 1/2-lower portion of surface and back surface of the bag for garbages obtained in the Example III-1 every intervals of 10 mm lengthwise and crosswise.

The bag for garbages was able to be employed as a bag for garbages for removing water by laying at an inside of a plastic-made container having a triangular column-shape, which was placed at a corner of a sink.

POSSIBILITY OF UTILIZATION IN INDUSTRY

In the particle-state fertilizer of the first aspect in the present invention, a durable time of a fertilizing effect can be controlled, and a coating layer is broken down and decomposed by microorganisms in soils after elution of fertilizing components, and it is not remained in the soils. Further, it has an effect that residual components disappear by degradation and decomposition of the coating layer after a period of growth of harvests, resulting in that there becomes easy a control for supplying a fertilizer.

According to the second aspect of the present invention, there can be obtained a resin composition having excellent biodegradability or degradability within a short time of period under natural circumstances, a molded article thereof, and a film, particularly, an inflation film.

In the method for the preparation of an inflation film, even though a resin temperature during extruding and a temperature of a tubular film when passing through rolls for nipping are not set up at a specified temperature, and moreover, even though a blowing-up ratio and drawing ratio are not controlled at a specified range, there can be obtained a tubular film which does not cause blocking, and which is well-balanced in an excellent outer appearance of a film, biodegradability, heat-sealing properties, and mechanical strength. The inflation film can be employed in a variety of uses such as wrapping materials (a film and a sheet etc.), agricultural materials (a multi-film for agriculture, binding tapes, and a film for wrapping root of plants, etc.), household materials (a backsheet for diapers, shopping bags, bags for garbages, bags for garbages for removing water, and compost bags, etc.) as a single layer or a laminate with papers or non-woven clothes, etc.

According to the third aspect of the present invention, there can be obtained a bag for garbages and a bag for garbages for removing water which show excellent biodegradability or degradability within a short time of period under natural circumstances.

**Claims**

1. A particle-state composition for agriculture and gardening characterized in that a coating material A or a mixture composed of the coating material A and a coating material B is coated on a particle-state fertilizer, and the coating material A is a biodegradable cellulose ester composition, and the coating material B is at least one selected from the group consisting of an olefin polymer, a copolymer containing an olefin, a polyvinylidene chloride, a copolymer containing vinylidene chloride, a diene-based polymer, waxes, a petroleum resin, a natural resin, a cellulose acetate resin, a polycaprolactone, and oils and fats and a modified product therefrom.

2. A particle-state composition for agriculture and gardening as claimed in claim 1, characterized in that said coating material A is a biodegradable cellulose ester composition containing a biodegradable cellulose ester which has an average substitution degree of not more than 2.15 and, in which not less than 60% by weight is decomposed after 4 weeks based on the amount of carbon dioxide gas produced in an experimental method according to the ASTM 125209-91.

3. A particle-state composition for agriculture and gardening as claimed in claim 1, characterized in that said coating material A is a biodegradable cellulose ester composition containing a cellulose acetate which has an average substitution degree of 1.0-2.15 and an average polymerization degree of 50-250, and an equivalent ratio of alkaline metals or alkaline earth metals with respect to the amount of sulfuric acid remained of 0.1-1.1.

4. A particle-state composition for agriculture and gardening as claimed in claims 1, 2, and 3, characterized in that said biodegradable cellulose ester composition is a composition containing 0-100 parts by weight of a plasticizer and/or an aliphatic polyester and 0-5 parts by weight of a photo-decomposing accelerator and/or a biodegradation accelerator based on 100 parts by weight of the cellulose ester.

5. A particle-state composition for agriculture and gardening as claimed in claim 2 or 3, characterized in that said biodegradable cellulose ester is a cellulose acetate.

6. A particle-state composition for agriculture and gardening as claimed in claim 4, characterized in that said plasticizer is at least one or more compounds selected from the group consisting of an aromatic polyvalent carboxylate including a phthalate, an aliphatic polyvalent carboxylate, a lower fatty acid ester or phosphate of a polyvalent alcohol, and polyols in which $\varepsilon$-caprolactone is added to a polyvalent alcohol.

7. A particle-state composition for agriculture and gardening as claimed in claim 1, 2, or 3, characterized in that said biodegradable cellulose ester composition is a biodegradable cellulose ester composition which is a composition containing a plurality of cellulose esters having different degree of substitution, which contains not less than 10% by weight of a cellulose ester having an average degree of substitution of not more than 2.15 based on the total amount of the cellulose ester, and in which not less than 20% by weight is decomposed after 4 weeks based on the amount of carbon dioxide gas generated in an experimental method according to the ASTM 125209-91.

8. A particle-state composition for agriculture and gardening as claimed in claim 1, characterized in that said coating material B is a polycaprolactone which belongs to polyesters synthesized by a ring-opening addition polymerization of $\varepsilon$-caprolactone.

9. A biodegradable resin composition which comprises a lactone resin, a synthetic aliphatic polyester resin, and a metallic salt of a fatty acid or an amide of a fatty acid.

10. A biodegradable resin composition as claimed in claim 9, wherein a proportion of said metallic salt of a fatty acid or said amide of a fatty acid is 0.2-5 parts by weight based on 100 parts by weight of the total amount of said lactone resin and said synthetic aliphatic polyester resin.

11. A biodegradable resin composition as claimed in any one of claims 9-10, wherein the weight ratio of said lactone resin/said synthetic aliphatic polyester resin ranges in 5/95-70/30.

12. A biodegradable resin composition as claimed in any one of claims 9-11, wherein there is further included a liquid lubricant in 0.1-3 parts by weight based on 100 parts by weight of the total amount of said lactone resin and said synthetic aliphatic polyester resin.

13. A biodegradable resin composition as claimed in any one of claims 9-12, wherein there is further included a finely-powdered silica in 0.1-3 parts by weight based on 100 parts by weight of the total amount of said lactone resin and said synthetic aliphatic polyester resin.

14. A biodegradable resin composition as claimed in any one of claims 9-13, wherein there is further included starch in 10-80 parts by weight based on 100 parts by weight of the total amount of said lactone resin and said synthetic aliphatic polyester resin.

15. A biodegradable resin molded article which comprises a biodegradable resin composition as claimed in any one of claims 9-14.

16. A biodegradable resin molded article as claimed in claim 15, wherein said molded article is a film.

17. A method for the preparation of a film, wherein a resin composition as claimed in any one of claims 9-14 is extruded from a circular die as a tubular-state film, a gas is blown into said tubular-state film and, said tubular-state film is expanded by pressure of said gas blown and, further, folded by rolls for nipping.

18. An inflation film obtained by a method for the preparation of a film as claimed in claim 17.

19. A degradable bag for garbages obtained by molding the biodegradable resin composition which comprises a lactone resin, a synthetic aliphatic polyester resin, and a metallic salt of a fatty acid or an amide of a fatty acid.

20. A degradable bag for garbages as claimed in claim 19, wherein a proportion of said metallic salt of a fatty acid or an amide of a fatty acid is 0.2-5 parts by weight based on 100 parts by weight of the total amount of said lactone resin and said synthetic aliphatic polyester resin.

21. A degradable bag for garbages as claimed in any one of claims 19-20, wherein the weight ratio of said lactone resin/said synthetic aliphatic polyester resin ranges in 5/95-70/30.

22. A degradable bag for garbages as claimed in any one of claims 19-21, wherein there is further included a liquid lubricant in 0.1-3 parts by weight based on 100 parts by weight of the total amount of said lactone resin and said synthetic aliphatic polyester resin.

23. A degradable bag for garbages as claimed in any one of claims 19-22, wherein there is further included a finely-powdered silica in 0.1-3 parts by weight based on 100 parts by weight of the total amount of the lactone resin and the synthetic aliphatic polyester resin.

24. A degradable bag for garbages as claimed in any one of claims 19-23, wherein there is further included starch in 10-80 parts by weight based on 100 parts by weight of the total amount of the lactone resin and the synthetic aliphatic polyester resin.

25. A degradable bag for garbages in any one of claims 19-24, wherein said bag has a plurality of openings.

26. A degradable bag for garbages as claimed in any one of claims 19-25, wherein a tear strength at ordinary temperatures is not less than 450 kg/cm$^2$, a tear strength at 80°C is not more than 10 kg/cm$^2$.

27. A degradable bag for removing water which comprises a degradable bag for garbages as claimed in claim 25.

| INTERNATIONAL SEARCH REPORT | International application No. |
|---|---|
| | PCT/JP98/03365 |

A. CLASSIFICATION OF SUBJECT MATTER
Int.Cl⁶ C05G3/00, C08L23/26, C08L67/04, C08K5/098, C08K5/20, B65F1/00, B65D30/02

According to International Patent Classification (IPC) or to both national classification and IPC

B. FIELDS SEARCHED

Minimum documentation searched (classification system followed by classification symbols)
Int.Cl⁶ C05G3/00, C08L23/26, C08L67/04, C08K5/098, C08K5/20, B65F1/00, B65D30/02

Documentation searched other than minimum documentation to the extent that such documents are included in the fields searched
Jitsuyo Shinan Koho              1926-1993    Toroku Jitsuyo Shinan Koho    1994-1998
Kokai Jitsuyo Shinan Koho    1971-1993

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP, 7-33576, A  (Asahi Chemical Industry Co., Ltd.),<br>3 February, 1995 (03. 02. 95),<br>Claims ; Par. Nos. [0011], [0012]<br>& WO, 95/3260, A1 & EP, 661250, A1<br>& US, 5645624, A | 1<br>2-8 |
| X<br>Y | JP, 6-279161, A  (Zaidan Hojin Kankoku Kagaku Gijitsu Kenkyuin),<br>4 October, 1994 (04. 10. 94),<br>Claims ; Par. No. [0020] ; Examples<br>& KR, 9506288, B1 | 1<br>2-8 |
| X<br>Y | JP, 5-279158, A  (Zaidan Hojin Kankoku Kagaku Gijutsu Kenkyuin),<br>26 October, 1993 (26. 10. 93),<br>Claims ; Par. Nos. [0017], [0021] ; Examples<br>& KR, 9502341, B1 | 1<br>2-8 |

☒ Further documents are listed in the continuation of Box C.       ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 19 October, 1998 (19. 10. 98) | 4 November, 1998 (04. 11. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

INTERNATIONAL SEARCH REPORT

| International application No. |
| --- |
| PCT/JP98/03365 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP, 7-76632, A  (Daicel Chemical Industries, Ltd.),<br>20 March, 1995 (20. 03. 95),<br>Claims  &  EP, 597478, A1  &  US, 5478386, A<br>&  US, 5609677, A  &  US, 5720803, A | 1-8 |
| X | JP, 8-245836, A  (Chisso Corp.),<br>24 September, 1996 (24. 09. 96),<br>Claims ; Par. Nos. [0009], [0012]  (Family: none) | 9-11<br>14-18 |
| Y | | 12, 13,<br>19-25, 27 |
| A | | 26 |
| Y | JP, 5-14008, Y2  (Unitika Ltd.),<br>16 September, 1994 (16. 09. 94),<br>Claims ; Par. No. [0011]  (Family: none) | 19-25, 27 |
| A | | 26 |
| Y | Yoshinaga Abe, "Compounding Additives for Plastics<br>—Fundamentals and Application, New Edition<br>(in Japanese)", first edition, Taisei-sha K.K.<br>(1984), p112, 288 | 12, 13,<br>22, 23 |

Form PCT/ISA/210 (continuation of second sheet) (July 1992)

## INTERNATIONAL SEARCH REPORT

| International application No. |
|---|
| PCT/JP98/03365 |

**Box I   Observations where certain claims were found unsearchable (Continuation of item 1 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II   Observations where unity of invention is lacking (Continuation of item 2 of first sheet)**

This International Searching Authority found multiple inventions in this international application, as follows:

The technical feature of the group of inventions of claims 1 to 8 resides in being coated with a coating material comprising "a biodegradable cellulose ester composition", while the biodegradable resin used in the group of inventions of claims 9 to 27 is different from the cellulose ester. Therefore, the group of inventions of claims 9 to 27 cannot be considered as having a technical feature in common with the group of inventions of claims 1 to 8.

Such being the case, the group of inventions of claims 1 to 8 and the group of inventions of claims 9 to 27 are not considered as relating to a group of inventions so linked as to form a single general inventive concept

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.

☒   No protest accompanied the payment of additional search fees.

Form PCT/ISA/210 (continuation of first sheet (1)) (July 1992)

| INTERNATIONAL SEARCH REPORT | International application No. |
|---|---|
| | PCT/JP98/03365 |

**Continuation of Box No. II of continuation of first sheet (1)**

as provided for in Section 13 of the Regulations under the Law Concerning the International Application of the Patent Cooperation Treaty and Related Matters.

Form PCT/ISA/210 (extra sheet) (July 1992)